Europäisches Patentamt

European Patent Office

Office européen des brevets

(11) Publication number: **0 449 193 A1**

# EUROPEAN PATENT APPLICATION

(21) Application number: 91104743.9

(22) Date of filing: 26.03.91

(51) Int. Cl.⁵: **G02B 6/34**, G11B 7/135

(30) Priority: 26.03.90 JP 76030/90
09.07.90 JP 180807/90

(43) Date of publication of application:
02.10.91 Bulletin 91/40

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Nishiwaki, Seiji**
**4-20-504, Fuminosato 1-chome, Abeno-ku**
**Osaka-shi, Osaka(JP)**
Inventor: **Uchida, Sinji**
**1-8-524, Toyosato 4-chome,**
**Higashiyodogawa-ku**
**Osaka-shi, Osaka(JP)**
Inventor: **Asada, Junichi**
**9-39, Minamikasugaoka 6-chome**
**Ibaraki-shi, Osaka(JP)**

(74) Representative: **Eisenführ, Speiser & Strasse**
**Martinistrasse 24**
**W-2800 Bremen 1(DE)**

(54) Optical coupling apparatus for coupling light into a waveguide.

(57) A photocoupler having a polarization converting device (3L) for converting a laser light emitted from a laser source (1) to a polarized light (6B) having an electric vector oriented in a direction of a tangent of a circle having its center on an optical axis of the photocoupler and the phase of which is shifted by $\pi$ at the boundary of a disclination line passing the center of the circle and the wave front of the converted laser light (6B) is spherical and a coupler (5) for exciting a waveguided light (7) which propagates from the center (0) thereof radially wherein said coupler (5) is positioned so that the input coupling efficiency becomes maximum.

*Fig. 1*

## BACKGROUND OF THE INVENTION

### FIELD OF THE INVENTION

The present invention relates to an optical coupling apparatus for introducing and coupling an incident light into a wave guide.

### DESCRIPTION OF THE PRIOR ART

Prior art related to the optical coupling apparatus is explained at first referring to, for instance an apparatus disclosed in PCT laid-open publication No. WO 89/06424 which employs so called grating coupling method.

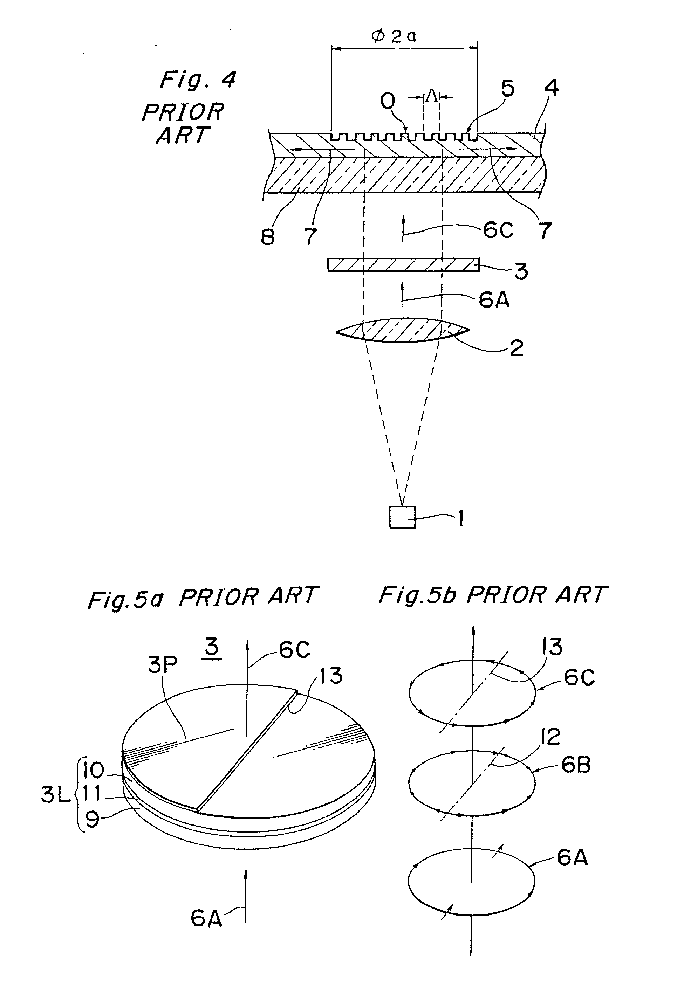

Fig. 4 shows a schematical cross-sectional view of the conventional optical coupling apparatus. A light of a wave length $\lambda$ emitted from a laser diode 1 is converted into a parallel light by a condenser lens 2 and then, converted, via a polarizer device 3 into a circumferentially polarized light 6C in which the electric field vector is oriented in a tangential direction of a concentric circle. The polarized light 6C is incident onto a circular coupler 5 comprised of concentric gratings of a pitch $\Lambda$ in a radial direction which is formed on a wave guide layer 4 having an equivalent refractive index N and has a radiation decay factor $\alpha$. If $\Lambda$ and N are in a relation $q\lambda/\Lambda = -N$ wherein q is a negative integer, a phase matching condition is satisfied. If this condition is satisfied, the incident light 6C excites a waveguided light propagating in a radially outward direction and a waveguided light propagating in a radially inward direction simultaneously (this relation is called simultaneous exciting condition) and they interfere with each other resulting in a waveguided light 7 propagating in a radially outward direction as a whole. The wave guide layer 4 is formed on a transparent substrate 8 having a refractive index lower than that thereof.

The polarization converting device 3 is comprised of a liquid crystal polarizer 3L and a phase difference film 3P as shown in Fig. 5a (See, for example Japanese Patent laid-open publication No. H1-246808). The liquid crystal polarizer 3L has two transparent substrates 9 and 10 and a nematic liquid crystal 11 filled inbetween two substrates. The surfaces of one substrate 9 and the other substrate 10 formed with a polyamide film are rubbed in one direction and a rotational direction, respectively, so that the liquid crystal orients in one direction at one substrate side 9 and in a concentric tangential direction at the other substrate side 10 and, accordingly, the twist angle of the molecule of the liquid crystal in a direction of the thickness thereof varies continuously in declination. When a linearly polarized light having an oscillation direction which coincides with the orientation direction at the incident side is incident to the liquid crystal layer 11 having an optimized thickness, the plane of oscillation of the light is rotated along the twist of the molecule of the liquid crystal. Accordingly, the linearly polarized light 6A is twisted in the thickness direction of the device by an angle nearly equal to the twist angle at each position and becomes a light 6B having a plane of oscillation substantially coincident with the orientation direction of the molecule of the liquid crystal at the output side 10. However, since the twist angle of the liquid crystal is disclined at the boundary of a disclination line passing the center of the device and substantially coinciding with the orientation direction at the incident side 9 and also the rotation direction of the oscillation plane of the light is disclined thereat, the phase of the light in one semicircle area devided by the disclination line is delayed by $\pi$ from that of the light in the other semicircle area. In order to adjust the delay in phase, a phase difference film 3P of $\lambda/2$ is provided on the surface of the emission side of the transparent substrate 10. By aligning the boundary line 13 of the phase difference film 3P to the disclination line 12, the phase of the emitting light in the one semicircle area coincides with that in the other semicircle area and, thereby, a complete circumferentially polarized light 6C is obtained.

The coupling efficiency of the incident light to the guided light, namely the ratio of an amount of the incident light to that of the coupled light is given by solving so called mode coupling equation, as known to those skilled in the art. However, since it is very complicate to solve the mode coupling equation under the simultaneous exciting condition as mentioned above, the solution is estimated by extrapolating a solution obtained by solving the mode coupling equation under a non-simultaneous exciting condition. As the result thereof, the input coupling efficiency in the case that an error $d\lambda$ of the wave length, an error dN of the equivalent refractive index and an error $d\Lambda$ of the pitch are caused from the state wherein the phase matching condition is satisfied is given by the following equation provided that the incident light has an amplitude represented by a Gauss function $\exp\{-(r/\tau a)^2\}$ wherein r is a distance from the center axis of the coupler and assuming $x = 2\pi/\lambda$.

$$\eta/\sigma e_r^2 = 8\alpha\, a\{G_1(1)\exp(-\alpha a)/\tau\}^2\{1-(x a N \in)^2 H_D\} \qquad (1)$$

wherein

$$H_D = G_3(5)/G_1(1) - \{G_2(3)/G_1(1)\}^2 \quad (2)$$

$$\epsilon = dN/N - d\lambda/\lambda + d\Lambda/\Lambda \quad (3)$$

$$G_1(n) = \int_0^1 t^{n/2} (g_p - I_B g_M) \, dt \qquad \cdots (4)$$

$$G_2(n) = \int_0^1 t^{n/2} (g_p + I_B g_M) \, dt \qquad \cdots (5)$$

$$G_3(n) = \int_0^1 t^{n/2} \frac{(g_P + I_B g_M)^2}{g_P - I_B g_M} \, dt \qquad \cdots (6)$$

$$g_P(t) = \exp\{-(t/\tau)^2 + \alpha at\} \quad (7)$$

$$g_M(t) = \exp\{-(t/\tau)^2 - \alpha at\} \quad (8)$$

A radiation light from the centripetal waveguided light includes an incident light and a light propagating in a reversed direction and $\sigma$ of the equation (1) indicates a ratio of light amount of the latter to the former. If the grating has a symmetric cross-section, $\sigma = 1/2$ in the case of two beam coupling and if a blaze grating is used, $\sigma = 1$. Further, $e_r$ represents a component of oscillation in a direction of a tangent of a circle with respect to a unit electric vector of the input light. If the input light is a circumferentially polarized light, $e_r = 1$ and, if it is a circularly polarized light, $e_r = 1/\sqrt{2}$. $H_D$ given by the equation (2) represents a degree of tendency to gradation of the coupling efficiency due to errors.

The function $I_B$ used in the equations (4) to (6) represents a factor which determines a manner of interference between the centrifugally propagating waveguided light and the centripetal one both excited by the incident light 6C. If the interference is positive namely both interfere so as to strengthen with each other, $I_B = -1$ (called regular phase condition). $I_B = 0$ (called single phase condition) indicates no interference and $I_B = 1$ (called reciprocal phase condition) indicates that both interfere so as to weaken with each other.

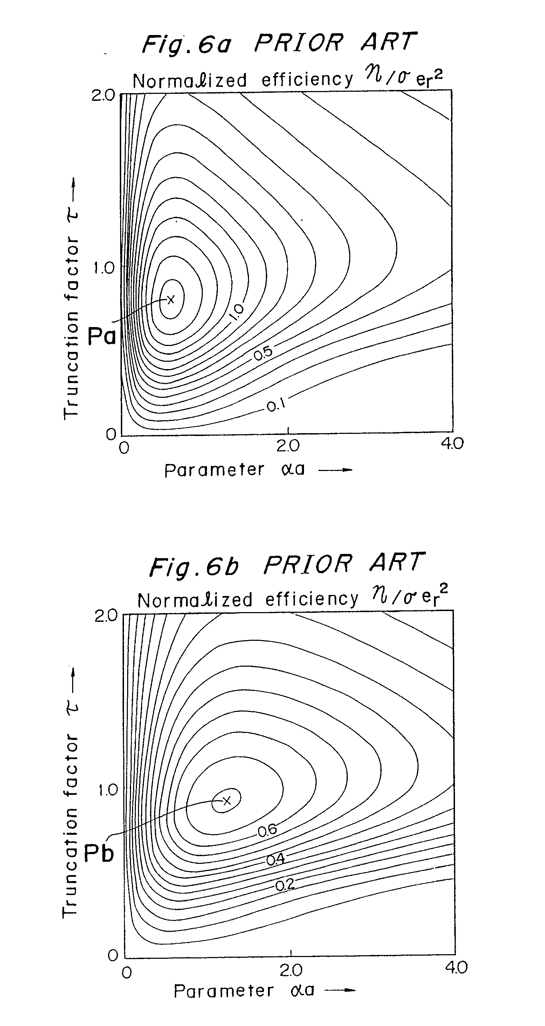

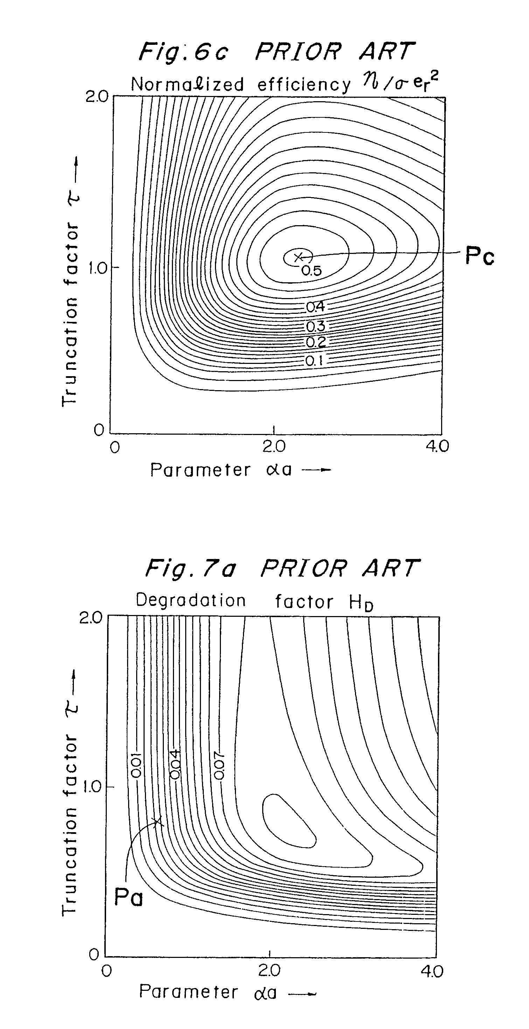

Figs. 6a, 6b and 6c show normalized coupling efficiencies $\eta/\sigma e r^2$ calculated for regular phase, single phase and negative phase conditions, respectively, which are represented using contours on a plane defined by a product $\alpha a$ of the radiation decay factor $\alpha$ and the radius a of the coupler and the truncation factor $\tau$ for the Gaussian incident light defined by a Gauss function $\exp\{-(r/\tau a)^2\}$.

They take maximum values 1.438, 0.706 and 0.502 at points Pa(0.60, 0.79), Pb(1.23, 0.91) and Pc(2.26, 1.04), respectively.

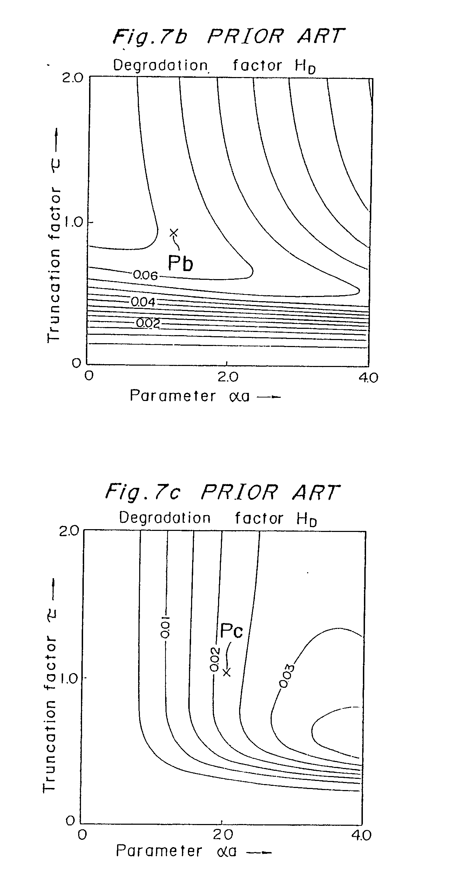

Figs. 7a, 7b and 7c show the degradation factors $H_D$ calculated for regular phase, single phase and reciprocal phase conditions, respectively, which are represented using contours on a plane defined by a product $\alpha a$ and the truncation factor $\tau$.

They take values 0.022, 0.064 and 0.025 at points Pa, Pb and Pc mentioned above.

The condition necessary to depress the degradation of the coupling efficiency within 20 % under the maximum efficiency condition (namely, at respective points Pa, Pb and Pc) is given by the next equation.

EP 0 449 193 A1

$$\left| a \; N\varepsilon / \lambda \right| \; < \; \left[ \begin{array}{l} 0.48 \text{ for regular phase cond.} \\ 0.28 \text{ for single phase cond.} \\ 0.45 \text{ for reciprocal phase cond.} \end{array} \right] \quad \ldots (9)$$

As are understood from results obtained by the analysis mentioned above, the conventional light coupling device has disadvantages as follows.

At first, the coupling efficiency under the phase matching condition is $\eta$ = 25 % at the maximum assuming $\sigma$ = 0.5 (see the point Pc of Fig. 6c) in the case that the incident light is a concentric circularly polarized light (or radially polarized light) in which electric vectors thereof have directions opposite to each other at opposite points and, thereby, phases of the guided waves excited shift by $\pi$ with each other resulting in the negative phase condition.

Next, in order to make the condition given by the equation (9) satisfy, the radius a of the coupler should be smaller than $0.45\lambda/\varepsilon N$ ($a < 0.45\lambda/\varepsilon N$) and, accordingly, $\alpha/\varepsilon$ should be larger than $5N/\lambda$ in the case of the maximum efficiency condition ($\alpha a$ = 2.26 at Pc of Fig. 6c). This means that $\alpha/\varepsilon$ must be larger than 1.1 $\times$ $10^4$ (1/mm) when $\lambda$ = 0.8 $\mu$m and N = 1.7.

This requires a technique for forming an extra-thin film having a high refractive index to obtain a large $\alpha$ but, in general, it is said difficult to make $\alpha$ larger than 50 (1/mm) in the grating coupler.

Further, since the laser diode has a deviation of wave length of about ±0.5 % and the wave guide layer has an error of the equivalent refractive index of about ±0.5 % due to errors of the thickness and the refractive index thereof, a total error $\varepsilon$ may be estimated to be of about ±1 % due to those errors. Accordingly, the condition $\alpha/\varepsilon$ > 1.1 $\times$ $10^4$ (1/mm) is too severe to realize. This is the second problem.

## SUMMARY OF THE INVENTION

An object of the present invention is to provide an optical coupling device having a high coupling efficiency by solving the problems mentioned above.

Another object of the present invention is to provide an optical coupling device having wide tolerances to various errors while maintaining a high coupling efficiency.

In order to achieve this object, according to the present invention, there is provided a photocoupler comprising: a laser source which emits a divergent laser light; a polarization converting means for converting a laser light emitted from said laser source to a polarized light the electric vector of which is equal at positions diagonally opposite to each other; a waveguide layer arranged on a plane perpendicular to the optical axis of said laser light; and a photocoupling means arranged on said waveguide layer, said photocoupling means having a concentric periodical structure, wherein said photocoupling means is arranged at a position relative to said laser light which gives a maximum coupling efficiency to said polarized light incident thereto.

Further, according to another facet of the present invention, there is provided a photocoupler comprising: a laser source which emits a divergent laser light; a polarization converting means for converting a laser light emitted from said laser source to a polarized light the electric vector of which is equal at positions diagonally opposite to each other; a waveguide layer arranged on a plane perpendicular to the optical axis of said laser light; a photocoupling means arranged on said waveguide layer, said photocoupling means having a concentric periodical structure; and a condenser lens means arranged between said laser source and said photocoupling means to make the incident light to said photocoupling means converge, wherein said photocoupling means is arranged at a position relative to said laser source which gives a maximum coupling efficiency to said polarized light incident thereto.

The photocoupler according to the present invention satisfies so called regular phase condition since the incident light is polarized by the polarization converting device to have the electric vector equal at positions diagonally opposite to each other. In this case, there exists a solution which gives the maximum input coupling efficiency since the incident light is a divergent or convergent light. Accordingly, is the coupler is positioned at the best position relative to the laser source, an extremely high coupling efficiency can be obtained. This allows relatively large tolerances for the wave length, the equivalent refractive index, the pitch of grating and the like.

## BRIEF DESCRIPTION OF THE DRAWINGS

These and other objects and features of the present invention will become clear from the following description taken in conjunction with the preferred embodiments thereof with reference to the accompany-

5

ing drawings throughout which like parts are designated by like reference numerals, and in which:

Fig. 1 is a cross-sectional view of the optical coupling device according to the first preferred embodiment of the present invention,

Fig. 2a, 2b and 2c are contour maps of the degradation factors $H_S$ on a ccordinate defined by $\alpha a$ and $\tau$ under regular phase, single phase and reciprocal phase conditions, respectively,

Fig.3 is a cross-sectional view of the optical coupling device according to the second preferred embodiment of the present invention,

Fig. 4 is a cross-sectional view of a conventional optical coupling device,

fig. 5a is a perspective view of a conventional polarization converting device 3 shown in Fig.4,

Fig. 5b is an explanatory view for indicating states of polarization in the polarization converting device 3,

Fig. 6a, 6b and 6c are contour maps of normalized coupling efficiencies $\eta/\sigma e_r{}^2$ obtained, according to the conventional device, under regular phase, single phase and reciprocal phase conditions represented on a coordinate defined by $\alpha a$ and $\tau$, respectively,

Figs. 7a, 7b and 7c are contour maps of degradation factors $H_D$ obtained, according to the conventional device, under regular phase, single phase and reciprocal phase conditions, respectively.

## DETAILED DESCRIPTION OF THE PREFERRED EMBODIMENTS

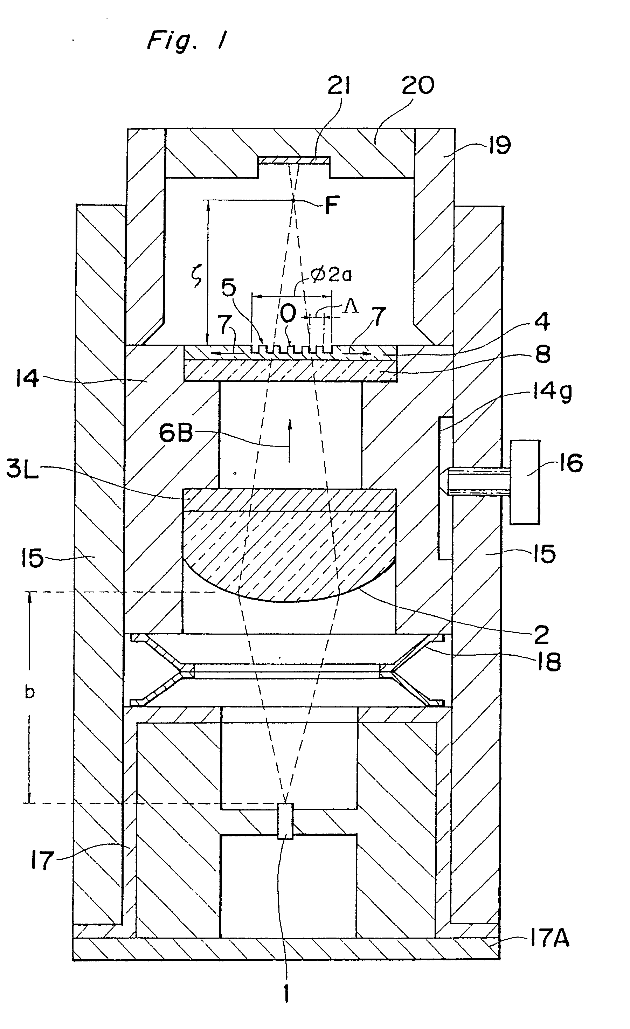

Fig. 1 shows an optical coupling apparatus according to the first preferred embodiment of the present invention.

Laser beam emitted from a laser diode 1 housed in a laser tube 17 and a cover plate 17A fixed thereto becomes a convergent beam to be focused at a focal point F by passing through a condenser lens 2 held by a cylindrical holder 14. The beam is converted into a polarized light beam 6B having electric vectors orienting tangential directions of a circle but having phases shifted by $\pi$ at opposite two points on the circle by a polarization converting device 3L set on the condenser lens 2.

The polarized beam is inputted to a circular coupler 5 of a radius "a" which provides concentric gratings of a pitch A formed on a wave guide layer 4 orthogonal to the optical axis of the apparatus. The input light excites a waveguided light 7 which propagates radially from the center O of the coupler 5.

The coupler 5 is set so as to locate forward or rearward to the focal point F of the condenser lens 2 by a distance $\zeta$ ($\zeta > 0$ or $\zeta < 0$). The wave guide layer 4 is formed on a transparent substrate 8 having a refractive index smaller than that of the wave guide layer 4. The substrate 8 is mounted on the holder 14 coaxially with the condenser lens 2. The holder 14 is slidably guided in a direction of the optical axis by a guide cylinder 15 and is biased upwardly by a pair of leaf springs 18 inserted between the laser tube 17 fixed to the bottom of the guide cylinder 15 by an adhesive agent and the holder 14.

Upon setting the holder 14, it is manually pushed down using a cylindrical tool 19 against a spring force by the leaf spring 18 and fixed at a desired position by fastening a set screw 16 as a stopper which engages to a groove 14g formed on the outer wall of the holder 14. The position of the holder 14 to be set is determined so that an amount of light detected by a photo-sensor 21 fixed on a sensor holder 20 becomes minimum.

The polarization converting device 3L has a composition substantially same as that obtained when the phase difference film 3P is removed from the conventional converting device 3 shown in Fig. 5a though it is not represented concretely in Fig. 1.

Namely, as stated with respect to Fig. 5a, the phase of the light passing through one semicircle thereof divided by the declination line 12 is shifted by $\pi$ to that of the light passing through the other semicircle.

Since the coupling is caused by a convergent or divergent light in the present preferred embodiment and is out of the simultaneous exciting condition except for the coupling at the vicinity of the center of the coupler, only a centrifugally propagating waveguided light is excited.

The following relation is introduced between the input light and the waveguided light in the coupler under the non-simultaneous exciting condition according to the mode coupling equation.

$$dA/dr = iKA_0 e_r \exp\{i(\varkappa N - t)r\} - (\alpha + 1/2r)A \qquad (10)$$

wherein r is a distance from the center O of the coupler, A is an amplitude of the waveguided light, Ao is an amplitude of the input light, K is a coupling coefficient of the input light to the waveguided light, N is an equivalent refractive index of the wave guide layer, t is a magnitude of an image, orthogonally projected on the surface of the coupler, of a composite vector which is composited with q-times of the grating lattice vector (q is an order of coupling) and an input light propagation vector, $\alpha$ is a radiation decay factor of the grating coupler and (1/2r) indicates an amplitude damping due to a sectorial in-plane divergence accompanied by propagation of the waveguided light.

The grating pitch $\Lambda$ is given by solving the following equation in the present preferred embodiment assuming that a spherical aberration caused upon passing through a parallel substrate such as the substrate 8 can be neglected although it gives minor influences to the actual phase matching condition.

$$\{1 + I_B\exp(-2\alpha r)\}\tan\{xr(N-q\lambda/A)\} = -\{1-I_B\exp(-2\alpha r)\}\tan\{xr^2 \zeta/|\zeta|(r^2 + \zeta^2)^{1/2}\} \quad (11)$$

Assume that the coupler is shifted by a small distance $\delta$ in order to correct the error $\epsilon$ from the state satisfying the phase matching condition as represented by the equation (3) in relation to the errors of $\lambda$, $N$ and $\Lambda$ and that the distance $\delta$ is very small when compared with $\zeta$ and, accordingly, a change in the truncation factor $\tau$ due thereto is negligibly small. Further, the incident light has a Gaussian amplitude as represented by $\exp\{-(r/\tau a)^2\}$.

The input coupling efficiency is given as follows by solving the equation (10) assuming $H_F = G_4(9)/G_1-(1)$.

$$\eta/\sigma e_r^2 = 8\alpha a\{G_1(1)\exp(-\alpha a)/\tau\}^2 \times\{1 + 2(x2(xa^2/\zeta))^2 I_B H_F\}^2 \times [1-x^2(a/\zeta)^4\{H_c(\delta-h_S N\epsilon\zeta^2/a)^2 + H_S(N\epsilon\zeta^2/a)^2\}] \quad (12)$$

wherein

$$G_4(n) = \int_0^1 t^{n/2} \frac{g_P g_M(g_P - I_B g_M)}{(g_P + I_B g_M)^2} dt$$

$$\dots (13)$$

$h_S = \{G_2(7)G_1(1)-G_1(5)G_2(3)\}/\{G_1(9)G_1(1)-G_1{}^2(5)\}$ \quad (14)
$H_c = G_1(9)/G_1(1)-\{G_1(5)/G_1(1)\}^2$ \quad (15)
$H_S = H_D - h_S{}^2 Hc$ \quad (16)

It is to be noted that the equation (12) coincides with the equation (1) if $|\zeta|\rightarrow\infty$ and $\delta = 0$. Namely, the equation (1) is an equation obtained by extrapolating the solution of the equation (12) which is obtained by solving the equation (10) under the non-simultaneous exciting condition, as stated before. Since the present preferred embodiment satisfies the non-simultaneous condition substantially, the equation (12) representing the coupling efficiency can be applied effectively.

In the above equations, $H_F$ indicates a degree of change in the coupling efficiency accompanied by a convergent light, that is by a shift from the vertical incidence, Hc indicates a degree of tendency in degradation of the coupling efficiency due to an error of the position of the coupler and $H_S$ indicates a degree of tendency in degradation of the coupling efficiency optimized by adjustment of the position. $H_F$ is a positive number and takes values 0.2 and 0.008 at Pa and Pc of Figs. 6a and 6c, respectively. Since $h_S$ is a coefficient which gives an optimal distance for moving the coupler (it takes values 0.53, 0.85 and 0.57 at points Pa, Pb and Pc, respectively), and $H_S > 0$, the optimal distance which makes the input coupling efficiency maximum is given by $\delta = h_S N\epsilon \zeta^2/a$, as is apparent from the equation (12).

In other words, there exists a solution which gives the maximum coupling efficiency even if the coupler has a relatively large total error $\epsilon$ due to errors of $\lambda$, $N$ and $\Lambda$. Though the position of the coupler which gives the maximum coupling efficiency can be calculated theoretically as mentioned above, it is easily detected optically.

This is done by detecting the amount of light passing through the coupler 5 using the photosensor 21. The minimum output of the photosensor 21 gives the best position of the coupler. As stated above, the holder 14 is pressed down using the pressing tool 19 and, then, moved upwardly by the spring force while monitoring the output of the photosensor. When the output of the photosensor 21 becomes minimum, the holder 14 is fixed by fastening the screw 16. The measurement of the input coupling efficiency is not limited to the above and, measuring of the streaking light of the input waveguided light 7 or measuring of an amount of a radiation light from one more coupler formed on the wave guide layer 4 is considered to be available.

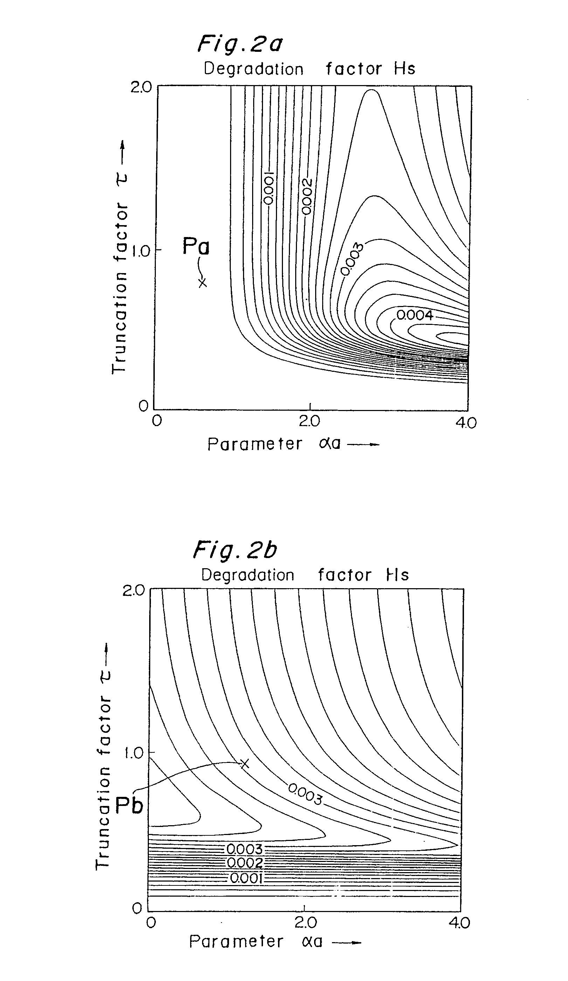

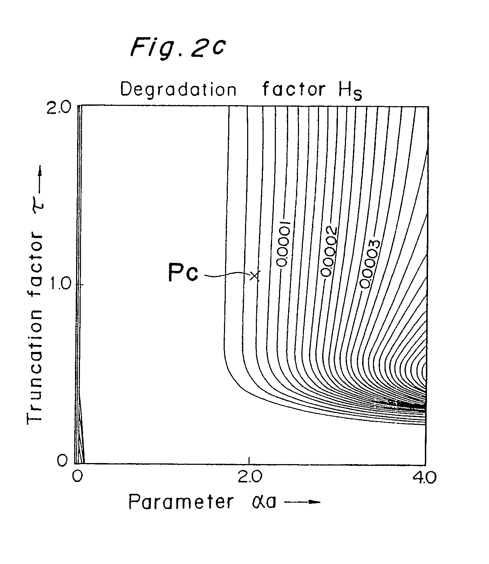

Figs. 2a, 2b and 2c are contour maps on a coordinate defined by $\alpha a$ and $\tau$ which show the degradation factor $H_S$ calculated for the regular phase, the single phase and reciprocal phase conditions, respectively. $H_S$ takes values $2.0 \times 10^{-5}$, $3.2 \times 10^{-3}$ and $8.5 \times 10^{-5}$ at points Pa, Pb and Pc, respectively.

As stated above, the boundary condition is the regular phase condition in the present preferred embodiment since the electric vectors of the input light are equal at opposite positions and the phase of the waveguided light excited coincides with each other.

The coupling efficiency under the phase matching condition becomes $\eta$ = 71.9 % at the point Pa assuming $\sigma$ = 0.5 which is about three times as large as that shown in Fig. 6a. Although the coupling efficiency shown in Fig. 6a is not exact since it is estimated by extrapolating a solution obtained under the non-simultaneous exciting condition to the simultaneous exciting condition, it is understood qualitatively that the coupling efficiency becomes large under the regular phase condition when compared with the single phase condition and the reciprocal phase condition. Namely, under the regular phase condition, the phase of the centripetally propagating waveguided light which propagates in a centrifugal direction after passing the center of the coupler coincides with that of the centrifugal propagating wave so as to strengthen with each other.

Further, it is to be noted that the degradation factor under the regular phase condition can be lowered to an order of 1/1000 of that under the single phase or the negative phase condition, as is apparent from comparison of Fig. 2a showing one adjusted by $\delta$ ($=h_S N \in \zeta^2/a$) with Fig. 7a showing one before the adjustment ($\delta = 0$). This means that tolerances of errors regarding the wave length $\lambda$, the equivalent refractive index N, the pitch $\Lambda$ and the like can be allowed to have relatively large values, for example about 33 ($\fallingdotseq 1/\sqrt{1000}$)times as large as those required in the conventional coupler.

Thus, a high coupling efficiency with a small degradation factor can be obtained according to the present invention.

The optimization of the coupling efficiency by the positional adjustment of the coupler in the first preferred embodiment is effective to deviations of the wave length due to differences among light sources. However, it is not effective to a time-dependent variation of the wave length. It is known in the laser diode that the emitting point thereof moves according to an emission power and a temperature thereof and an amount of movement corresponds to an amount of variation in the wave length. It becomes possible to compensate the time dependent variation in the wave length of the laser diode by utilizing the property mentioned above. For instance, assume that the emitting point thereof shifts toward the condenser lens 2 by $\epsilon_L d\lambda$ when the wave length varies by $d\lambda$. If the emitting point locates at a position distant from the condenser lens 2 of a focal length f by a distance b (b>f) at first, the focal point F shifts by $\epsilon_L d\lambda f^2/(b-f)^2$ so as to remote from the lens 2 when the emitting point shifts by $\epsilon_L d\lambda$. Accordingly, if the next equation is satisfied, the gradation of the coupling efficiency due to the variation of the wave length can be cancelled completely.

$$\epsilon_L f^2/(b-f)^2 = h_S N \zeta^2/a\lambda \qquad (17)$$

This condition can be satisfied actually since $\epsilon_L$ takes a value of about $10^3$ in a direction of the junction plane of the laser diode, $h_S$ takes values of 0.53, 0.85 and 0.57 at points Pa, Pb and Pc, respectively, and accordingly, $\zeta(b-f)/f$ is estimated to take a value of about $10^3$ $a\lambda$. However, the equation (17) is not practical since the emitting point moves not only in a direction of the junction plane but also in a direction of the normal line of thereof. Assuming that it shifts by $\epsilon_S d\lambda$ in the direction of the normal line thereof, the equation (17) should be revised as follows.

$$(\epsilon_P + \epsilon_S)f^2/2(b-f)^2 = h_S N \zeta^2/a\lambda \qquad (18)$$

Though the coupler 5 is shifted by the holder 14 in the first preferred embodiment, the same effect can be obtained by moving the laser diode 1 or the condenser lens 2. Also, the polarization converting device 3L may be replaced to a device which converts a linearly polarized light to a polarized light wherein the electric vector thereof has phases shifted by $\pi$ at opposite positions in a direction of the radius vector or a 1/4 wavelength plate since each satisfies the regular phase condition.

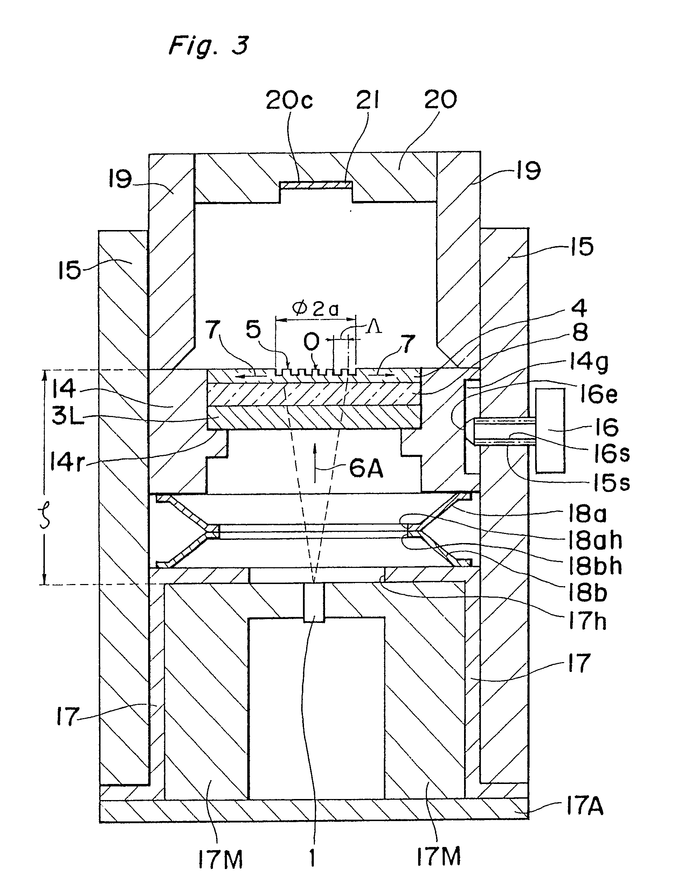

Fig. 3 is a cross-sectional view showing the second preferred embodiment of the present invention. Members same as those in Fig. 1 have same reference numerals in Fig. 3 to omit particular explanation thereabout.

In this preferred embodiment, a divergent light of a wave length $\lambda$ emitted from a laser diode 1 is directly introduced to a polarization converting device 3L and, thereby, converted to a polarized light 6B having an electric vector oriented in a direction of a tangent of a concentric circle the phase of which is

shifted by $\pi$ at opposite positions. Then, it is inputted to a circular coupler 5 of a radius a having concentric gratings of a pitch $\Lambda$ which is formed on a waveguide layer 4 and excites a waveguided light 7 which propagates in a radially outward from the center O of the coupler 5. The wave guide layer 4 is formed on a transparent substrate 8 having a refractive index smaller than that of the former and the latter is fixed in the hollow portion of a cylindrical holder 14. The holder 14 is slidably guided by a guide cylinder 15 and fixed by a screw 16. The axis of the guide cylinder 15 coincides with the axis of the coupler 5.

The second preferred embodiment corresponds to a case of $\zeta<0$ in the preferred embodiment and uses a divergent light.

Substantially same effects as those of the first preferred embodiment can be obtained in the second preferred embodiment which is more compact than the first one since the condenser lens 2 is omitted.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A photocoupler comprising:

   a laser source which emits a divergent laser light;

   a polarization converting means for converting said laser light emitted from said laser source to a polarized light the electric vector of which is equal at positions diagonally opposite to each other;

   a wave guide layer arranged on a plane perpendicular to the optical axis of said laser light; and

   a photocoupling means arranged on said wave guide layer, said photocoupling means having a concentric periodical structure,

   wherein said photocoupling means is arranged at a position relative to said laser source which gives a maximum coupling efficiency to said polarized light incident thereto.

2. The photocoupler as claimed in claim 1 in which said polarization converting means converts said laser light so that the electric vector thereof orients in a direction of a tangent of a circle having a center on said optical axis or of a radius vector thereof and the orientation of said electric vector is disclined at the boundary of a disclination line perpendicular to said optical axis.

3. The photocoupler as claimed in claim 1 in which said polarization converting means converts said laser light to a circularly polarized light.

4. The photocoupler as claimed in claim 1 in which said photocoupling means is consisted of concentric gratings of.

5. The photocoupler as claimed in claim 1 further comprising;

   a guide means for guiding said photocoupler means in a direction of said optical axis; and

   a positioning means for positioning said photocoupler means at said position which give a maximum coupling efficiency to said polarized light incident thereto.

6. A photocoupler comprising:

   a laser source which emits a divergent laser light;

   a polarization converting means for converting said laser light emitted from said laser source to a polarized light the electric vector of which is equal at positions diagonally opposite to each other;

   a wave guide layer arranged on a plane perpendicular to the optical axis of said laser source;

   a photocoupling means arranged on said wave guide layer, said photocoupling means having a concentric periodical structure; and

   a condenser lens means arranged between said laser source and said photocoupling means to make the incident light to said photocoupling means converge,

   wherein said photocoupling means is arranged at a position relative to said laser source which gives a maximum coupling efficiency to said polarized light incident thereto.

7. The photocoupler as claimed in claim 6 in which said polarization converting means converts said laser light so that the electric vector thereof orients in a direction of a tangent of a circle having a center on said optical axis or of a radius vector thereof and the orientation of said electric vector is disclined at the boundary of a disclination line perpendicular to said optical axis.

8. The photocoupler as claimed in claim 6 in which said polarization converting means converts said laser light to a circularly polarized light.

9. The photocoupler as claimed in claim 6 in which said photocoupling means is consisted of concentric gratings.

10. The photocoupler as claimed in claim 6 further comprising;
   a guide means for guiding said photocoupler means in a direction of said optical axis; and
   a positioning means for positioning said photocoupler means at said position which give a maximum coupling efficiency to said polarized light incident thereto.

EP 0 449 193 A1

# Fig. 1

## *Fig. 2a*

### Degradation factor Hs

## *Fig. 2b*

### Degradation factor Hs

*Fig. 2c*

*Fig. 3*

Fig. 4
PRIOR
ART

Ø2a

0

Λ

5

4

8 7

6C

7

3

6A

2

1

Fig.5a PRIOR ART

3P

3

6C

13

10
3L 11
9

6A

Fig.5b PRIOR ART

13

6C

12

6B

6A

15

## Fig.6a PRIOR ART

Normalized efficiency $\eta/\sigma_{er}^2$

## Fig.6b PRIOR ART

Normalized efficiency $\eta/\sigma_{er}^2$

Fig. 6c   PRIOR ART

Normalized efficiency $\eta/\sigma\,e_r^2$

Fig. 7a   PRIOR ART

Degradation factor $H_D$

## *Fig.7b PRIOR ART*

Degradation factor $H_D$

Truncation factor $\tau$ →

Parameter $\alpha a$ →

0.06
0.04
0.02

Pb

## *Fig.7c PRIOR ART*

Degradation factor $H_D$

Truncation factor $\tau$ →

Parameter $\alpha a$ →

0.01
0.02
0.03

Pc

## DOCUMENTS CONSIDERED TO BE RELEVANT

EP 91104743.9

| Category | Citation of document with indication, where appropriate, of relevant passages | Relevant to claim | CLASSIFICATION OF THE APPLICATION (Int. Cl.5) |
|---|---|---|---|
| X,A | EP - A1 - 0 357 780 (MATSUSHITA) * Fig. 4-7,11,19 * | 1,3,4 | G 02 B 6/34 G 11 B 7/135 |
| D | & WO-A1-89/06 424 | 2,6-9 | |
| A | EP - A1 - 0 276 873 (FUJI PHOTO) * Abstract; fig. 1,4 * | 1,4,6, 9 | |

**TECHNICAL FIELDS SEARCHED (Int. Cl.5)**

G 02 B
G 11 B

The present search report has been drawn up for all claims

| Place of search | Date of completion of the search | Examiner |
|---|---|---|
| VIENNA | 21-06-1991 | GRONAU |

EPO FORM 1503 03.82 (P0401)